# EUROPÄISCHE PATENTANMELDUNG

(11) **EP 4 606 521 A1**
(43) Veröffentlichungstag der Anmeldung: **27.08.2025**
(21) Anmeldenummer: 24159226.0
(22) Anmeldetag: 22.02.2024
(51) Int. Cl.: B24B 41/04

(54) **WERKZEUGSPINDEL UND WERKZEUGMASCHINE UMFASSEND EINE WERKZEUGSPINDEL**

(71) Anmelder: Tschudin, Urs, 2540 Grenchen (CH)
(72) Erfinder: Tschudin, Urs, 2540 Grenchen (CH)
(74) Vertreter: EGLI-EUROPEAN PATENT ATTORNEYS

(57) **Zusammenfassung**

Werkzeugspindel (1), umfassend: eine Spindelwelle (3), die sich entlang einer Spindelachse (3a) erstreckt und an die ein Werkzeug an einer Werkzeugschnittstelle (31) drehfest koppelbar ist; ein Spindelgehäuse (2), das die Spindelwelle (3) aufnimmt; eine Antriebseinrichtung (4), die zum drehenden Antrieb mit einem Kopplungsabschnitt (33) der Spindelwelle (3) gekoppelt ist, eine Lagereinrichtung (4), die die Spindelwelle (3) im Spindelgehäuse (2) lagert, wobei die Spindelwelle (3), und vorzugsweise das Spindelgehäuse (2), aus einem Material gefertigt ist, das zumindest in einer Richtung einen Wärmeausdehnungskoeffizienten von im Wesentlichen Null aufweist. Zur Sicherstellung hoher Präzisionsanforderungen weist die Lagereinrichtung (4) einen ersten werkzeugschnittstellenseitigen Festlagerabschnitt (4a) und einen zweiten kopplungsabschnittsseitigen Festlagerabschnitt (4b) auf, wobei die Lagereinrichtung (4) entlang der Spindelachse (3a) zwischen Werkzeugschnittstelle (31) und Kopplungsabschnitt (3) angeordnet ist und alleine die Spindelwelle lagert.

## Beschreibung

Die vorliegende Erfindung bezieht sich auf eine Werkzeugspindel und eine Werkzeugmaschine umfassend eine Werkzeugspindel.

Aus der CH 715 948 A2 ist bereits eine Werkzeugspindel bekannt, die eine Spindelwelle umfasst, die mit einem Werkzeug koppelbar ist. Die Spindelwelle ist mittels einer Antriebseinrichtung antreibbar. Eine Lagereinrichtung lagert die Spindelwelle in einem Spindelgehäuse. Ferner wird vorgeschlagen, dass die Spindelwelle einen thermischen Ausdehnungskoeffizienten von nahe Null aufweist. Die Lagereinrichtung weist zwei Festlagerabschnitte auf.

In der CH 715 948 A2 sind jedoch die Festlagerabschnitte zu beiden Seiten der Antriebseinrichtung vorgesehen.

Jedoch besteht beim Stand der Technik das Problem, dass zwischen einem Lastangriffspunkt durch das Werkzeug und dem von besagtem Lastangriffspunkt entfernten Festlagerabschnitt ein relativ großer Abstand besteht. Dies kann zu relativ großen Verformungen führen, die hochpräzisen Anforderungen nicht gerecht werden. Außerdem wird die Werkzeugspindel gesamt relativ lang, und damit das Gewicht relativ hoch. Somit wird auch dadurch die Präzision beeinträchtigt. Für Hochpräzisionsanwendungen, wie Schleifmaschinen, insbesondere solche für spitzenloses Rundschleifen, kann die bekannte Werkzeugspindel nicht geeignet sein.

Es ist somit Aufgabe der vorliegenden Erfindung, eine hochpräzise und kompakte Werkzeugspindel vorzusehen, die insbesondere für eine Schleifmaschine, weiterhin besonders für spitzenloses Rundschleifen, geeignet ist.

Die vorstehende Aufgabe wird gelöst durch eine Werkzeugspindel, die die Merkmale nach Anspruch 1 aufweist.

Gemäß einem ersten Aspekt wird eine Werkzeugspindel, vorzugsweise für Schleifmaschinen, nochmals bevorzugt für spitzenlose Schleifmaschinen, vorgesehen, die umfasst: eine Spindelwelle, die sich entlang einer Spindelachse erstreckt und an die ein Werkzeug an einer Werkzeugschnittstelle drehfest koppelbar ist; ein Spindelgehäuse, das die Spindelwelle aufnimmt; eine Antriebseinrichtung, die zum drehenden Antrieb mit einem Kopplungsabschnitt der Spindelwelle gekoppelt ist, eine Lagereinrichtung, die die Spindelwelle im Spindelgehäuse lagert, wobei die Spindelwelle, und vorzugsweise das Spindelgehäuse, aus einem Material gefertigt ist, das zumindest in einer Richtung einen Wärmeausdehnungskoeffizienten in einem Bereich mit einer Untergrenze aus [-10*10⁻⁶/K, -5*10⁻⁶/K und -2*10⁻⁶/K] und einer Obergrenze aus [+2*10⁻⁶/K, +5*10⁻⁶/K und +10*10⁻⁶/K], insbesondere im Wesentlichen Null, aufweist.

Vom Stand der Technik insbesondere unterscheidend ist die vorliegende Erfindung gekennzeichnet dadurch, dass die Lagereinrichtung einen ersten werkzeugschnittstellenseitigen Festlagerabschnitt und einen zweiten kopplungsabschnittsseitigen Festlagerabschnitt aufweist, wobei die Lagereinrichtung entlang der Spindelachse zwischen Werkzeugschnittstelle und Kopplungsabschnitt angeordnet ist und alleine die Spindelwelle lagert.

Somit sind der werkzeugschnittstellenseitige Festlagerabschnitt und der kopplungsabschnittsseitige Festlagerabschnitt auf einer Seite des Kopplungsabschnitts angeordnet, und zwar auf der Seite der Werkzeugschnittstelle. Somit kann ein Abstand zwischen den beiden Festlagerabschnitten reduziert werden. Dadurch kann die Länge entlang der Spindelachse der Werkzeugspindel reduziert werden, wodurch Gewicht gespart werden kann. Weiterhin können absolute Verformungen sowohl in radialer als auch axialer Richtung sowie Durchbiegungen aufgrund der geringeren freien Länge zwischen den Festlagerabschnitten zumindest zwischen den Festlagerabschnitten reduziert werden, vorzugsweise vollständig unterbunden werden, auch wenn unter Umständen hohe Radial- und/oder Axiallasten abgetragen werden müssen. Weiterhin können die beiden Festlagerabschnitte eine Weiterleitung von am Kopplungsabschnitt auftretenden Vibrationen unterbinden. Somit kann die erfindungsgemäße Werkzeugspindel für Hochpräzisionsanwendungen, insbesondere für spitzenloses Schleifen, verwendet werden.

Definitionsgemäß sei angemerkt, dass ein Festlagerabschnitt radiale und axiale Lasten jeweils in entgegengesetzte Richtungen aufnehmen kann, also an das Spindelgehäuse abtragen kann.

Jeder Festlagerabschnitt kann zumindest ein Wälzlager umfassen, oder von zumindest einem Wälzlager gebildet werden.

Insbesondere kann erfindungsgemäß eine Wechselwirkung zwischen dem geringen Wärmeausdehnungskoeffizienten und der Lagereinrichtung bestehen. Denn der Wärmeausdehnungskoeffizient nahe Null begünstigt das Vorsehen zweier Festlagerabschnitte auf einer Seite des Kopplungsabschnitts, da die geringe Wärmeausdehnung die Designfreiheit für die Anordnung der Festlagerabschnitte erhöht. Durch den geringen Wärmeausdehnungskoeffizienten können die Festlagerabschnitte mit geringem Lagerabstand angeordnet werden, wobei im Falle von auftretenden Wärmedehnungen absolute Verformungen klein gehalten werden können.

Es ist zur Kenntnis zu nehmen, dass ein jeder Bereich, der durch die Kombination jeder angegebenen Untergrenze des Wärmeausdehnungskoeffizienten mit einer jeden Obergrenze erhalten wird, von dieser Erfindung umfasst ist. Besonders bevorzugt sind jedoch symmetrische Bereiche, wie [-10*10⁻⁶/K; +10*10⁻⁶/K], [-5*10⁻⁶/K; +5*10⁻⁶/K] und [-2*10⁻⁶/K; +2*10⁻⁶/K].

Spindelgehäuse und Spindelwelle können aus demselben Material gebildet sein.

Vorzugsweise ist ein minimaler Abstand zwischen dem ersten Festlagerabschnitt und dem zweiten Festlagerabschnitt entlang der Spindelachse gleich oder größer einem maximalen Durchmesser der Spindelwelle in einem Bereich, der von dem ersten und zweiten Festlagerabschnitt gelagert wird.

Somit kann die Steifigkeit der Spindelwellenlagerung erhöht werden, da ein ausreichender Abstand zwischen den Festlagerabschnitten sichergestellt werden kann. Dies ist insbesondere vorteilhaft, da auch am Kopplungsabschnitt Lasten durch die Antriebseinrichtungen eingeleitet werden. Insbesondere kann in Bezug auf den maximal auftretenden Durchmesser im Bereich zwischen den Festlagerabschnitten eine ausreichende Steifigkeit sichergestellt werden.

Vorzugsweise ist die zumindest eine Richtung der Wärmeausdehnung eine Radialrichtung der Spindelwelle, und nochmals vorzugsweise auch eine Richtung entlang der Spindelachse.

Somit kann ein Umfang des Werkzeugs, das mit der Spindelwelle koppelbar ist, mit höchster Präzision positioniert werden, und am Umfang wirkende hohe Lasten abgetragen werden. Dies ist insbesondere bei spitzenlosen Rundschleifmaschinen vorteilhaft, bei denen besonders hohe Lasten entlang des Umfangs wirken. Ist zudem eine Richtung entlang der Spindelachse frei von Wärmeausdehnung, kann eine Verschiebung eines Werkstücks in axialer Richtung unterbunden werden, und ein gleichmäßiger Abtrag am Werkstück sichergestellt werden.

Gemäß einem weiteren Aspekt kann zumindest der erste Festlagerabschnitt ein mehrreihiges Lager umfassen.

Somit kann die Lagersteifigkeit auf Seiten der Werkzeugschnittstelle erhöht werden. Somit kann die Präzision der Werkzeugführung weiter erhöht werden. Alternativ oder zusätzlich kann der zweite Festlagerabschnitt ein mehrreihiges Lager umfassen. Ein mehrreihiges Lager umfasst in dieser Offenbarung jede Anordnung in der eine Vielzahl von Wälzkörpern nebeneinander in Axialrichtung angeordnet sind. So sind dadurch mehrreihige Lager mit nur einem Lagerinnen- und Lageraußenring gemeint, aber auch direkt hintereinander in Axialrichtung angeordnete Lager mit jeweils einem Lagerinnen- und Lageraußenring, die sich in Axialrichtung berühren.

Gemäß noch einem weiteren Aspekt kann zumindest einer von dem ersten und dem zweiten Festlagerabschnitt vorgespannt sein.

Somit kann ein Lagerspiel unterdrückt werden, und die Präzision weiter erhöht werden. Weiterhin kann die Lagersteifigkeit erhöht werden.

Gemäß noch einem weiteren Aspekt kann zumindest der erste Festlagerabschnitt ein Schräglager umfassen.

Gemäß diesem Aspekt können relativ hohe kombinierte Radial- und Axiallasten aufgenommen werden. Zudem kann die Vibrationsempfindlichkeit reduziert werden. Damit kann insgesamt die Präzision, insbesondere die Rundlaufgenauigkeit, erhöht werden.

Vorzugsweise definieren der erste Festlagerabschnitt und der zweite Festlagerabschnitt eine O-Anordnung.

Somit können jeweilige virtuelle Lagerpunkte entlang der Spindelachse nahe an die Werkzeugschnittstelle durch den ersten Festlagerabschnitt und nahe an den Kopplungsabschnitt durch den zweiten Festlagerabschnitt verschoben werden. Damit kann die Präzision weiterhin erhöht werden.

Vorzugsweise ist die Spindelwelle als Hohlwelle ausgebildet.

Somit kann das Gewicht reduziert werden und zeitgleich eine notwendige Biegesteifigkeit sichergestellt werden. In Konsequenz kann durch das reduzierte Gewicht eine Präzision einer Werkzeugmaschine erhöht werden, wenn die Werkzeugspindel an einem Maschinengestell angebracht ist.

Gemäß noch einem weiteren Aspekt kann der Kopplungsabschnitt weiter radial innen als der erste und zweite Festlagerabschnitt gelegen sein.

Dadurch kann die Steifigkeit der Lagerung durch den ersten und zweiten Festlagerabschnitt erhöht werden. Zudem kann ein übermäßiges Vorspringen der Antriebseinrichtung, die mit dem Kopplungsabschnitt gekoppelt ist, in radialer Richtung unterdrückt werden. So kann die Kompaktheit der Werkzeugspindel sichergestellt werden.

Gemäß noch einem weiteren Aspekt kann die Antriebseinrichtung eine rotierende elektrische Maschine sein.

Dadurch kann die Spindelwelle präzise angetrieben werden. Insbesondere das Anlaufverhalten, das Beschleunigen und Bremsen der Spindelwelle kann durch die rotierende elektrische Maschine präzise gesteuert werden. Dies ist besonders vorteilhaft, da aufgrund der Kompaktheit der Spindelwelle die rotierende Masse verringert werden kann.

Gemäß noch einem weiteren Aspekt kann die Antriebseinrichtung koaxial zur Spindelachse angeordnet sein.

Somit kann ein übermäßiges Vorstehen der Antriebseinrichtung in radialer Richtung verhindert werden. Dies fördert die Kompaktheit der Werkzeugspindel.

Insbesondere kann ein Rotor einer rotierenden elektrischen Maschine direkt und koaxial an der Spindelwelle angeordnet sein. Somit kann sich der Rotor integral mit der Spindelwelle bewegen.

Es ist weiterhin vorteilhaft, wenn die Antriebseinrichtung direkt, also ohne zwischengeschaltetes Getriebe, an den Kopplungsabschnitt gekoppelt ist.

Vorzugsweise weist das Material der Spindelwelle und/oder des Spindelgehäuses kohlefaserverstärkten Kunststoff (CFK), insbesondere mit unterschiedlichen Wicklungsrichtungen, auf, wird nochmals vorzugsweise daraus gebildet.

Damit kann der geringe Wärmeausdehnungskoeffizient von im Wesentlichen Null sichergestellt werden. Zudem kann eine hohe Steifigkeit bei relativ geringem Gewicht sichergestellt werden. Die Präzision kann somit erhöht werden. Spindelgehäuse und Spindelwelle können aus CFK gebildet sein, aber unterschiedliche Wicklungsrichtungen bzw. Verlegerichtungen aufweisen.

Das CFK-Material kann aus einem unidirektionalen kohlefaserverstärkten Kunststoffmaterial gebildet sein, bei dem sich die Fasern parallel zur Spindelachse erstrecken. Es kann auch aus einem Gewebe mit zwei zueinander senkrechten Vorzugsrichtungen der Fasern gebildet sein, wie beispielsweise plain weave oder twill weave. Zudem kann die Spindelwelle mindestens zwei unterschiedlich orientierte unidirektionale Schichten aufweisen, die betragsmäßig um denselben Winkel, vorzugsweise 45°, relativ zur Spindelachse, aber in entgegengesetzte Richtungen, versetzt sind. In radialer Richtung kann der Materialaufbau symmetrisch sein. Im Hinblick auf einen radialen Wärmeausdehnungskoeffizienten nahe Null können die Fasern auch eine Komponente in radialer und axialer Richtung aufweisen, vorzugsweise können die Fasern in Bezug auf eine radiale und axiale Richtung in einem Winkel, von beispielsweise 45° geneigt sein, nochmals vorzugsweise zumindest zwei in jeweils unterschiedliche Richtungen, was einer Art Doppelhelix entsprechen kann.

Weiterhin kann das CFK-Material im Preform-Verfahren hergestellt sein. Das CFK-Material kann Kurzfasern, Langfasern oder Endlosfasern enthalten.

Gemäß noch einem weiteren Aspekt kann die Werkzeugspindel weiterhin eine, vorzugsweise fluidbetriebene, Kühleinrichtung umfassen, die ausgestaltet ist, den ersten und/oder zweiten Festlagerabschnitt und/oder die Antriebseinrichtung und/oder einen Abschnitt des Spindelgehäuses zwischen Kopplungsabschnitt und dem zweiten Festlagerabschnitt zu kühlen.

Damit kann eine übermäßige Wärmeentwicklung unterbunden werden. Somit kann selbst in Abschnitten mit einem von Null abweichenden Wärmeausdehnungskoeffizienten eine Verformung reduziert, vorzugsweise vollständig unterbunden werden. Eine fluidbetriebene Kühleinrichtung lässt sich leicht etablieren.

Vorzugsweise ist der erste und/oder zweite Festlagerabschnitt gasförmig gekühlt, vorzugsweise luftgekühlt, und/oder die Antriebseinrichtung flüssiggekühlt, vorzugsweise wassergekühlt.

Dadurch kann die Kühlung der Festlagerabschnitte vereinfacht werden, und kompakt ausgeführt werden. Zudem kann der Antriebseinrichtung eine relativ große Kühlleistung bereitgestellt werden.

Gemäß noch einem weiteren Aspekt kann die Werkzeugspindel einen Befestigungsabschnitt, der an einem Maschinengestell anbringbar ist und mit dem Spindelgehäuse gekoppelt ist, umfassen.

Somit kann die Werkzeugspindel als separates Element vorgesehen werden, das an einem Maschinengestell lösbar befestigbar ist. Der Befestigungsabschnitt kann beispielsweise ein Flansch sein.

Ein weiterer Aspekt sieht eine Werkzeugmaschine, vorzugsweise Schleifmaschine, insbesondere bevorzugt eine spitzenlose Schleifmaschine, vor, die umfasst: ein Maschinengestell; und eine Werkzeugspindel nach zumindest einem der vorangehenden Aspekte, die an dem Maschinengestell befestigt ist.

Somit können die obigen Aspekte bei der Werkzeugmaschine erzielt werden.

Vorzugsweise ist das Maschinengestell zumindest abschnittsweise, vorzugsweise vollständig, ebenfalls aus einem Material mit einem Wärmeausdehnungskoeffizienten in einem Bereich mit einer Untergrenze aus [-10*10⁻⁶/K, -5*10⁻⁶/K und -2*10⁻⁶/K] und einer Obergrenze aus [+2*10⁻6/K, +5*10⁻⁶/K und +10*10⁻⁶/K], insbesondere von im Wesentlichen Null, ausgebildet.

Damit kann eine Kompatibilität hinsichtlich des Wärmeausdehnungskoeffizienten zwischen Werkzeugspindel und Maschinengestellt hergestellt werden. Damit kann das Auftreten von Zwangsspannungen vermieden werden. Auch für das Maschinengestell ist jede Kombination aus Unter- und Obergrenze denkbar, wobei symmetrische Bereiche bevorzugt sind.

Alternativ oder zusätzlich kann das Material der Spindelwelle einen niedrigeren Wärmeausdehnungskoeffizienten als den des Materials des Maschinengestells aufweisen.

Das Material des Maschinengestells kann hier an dem Anbringungsabschnitt des Maschinengestells für den Befestigungsabschnitt des Spindelgehäuses bestimmt werden.

Dadurch lässt sich selbst bei einem höheren Wärmeausdehnungskoeffizienten des Maschinengestells eine hohe Rundlaufpräzision der Spindelwelle sicherstellen.

Alternativ oder zusätzlich kann das Material des Maschinengestells nichtmetallisch sein, insbesondere zumindest abschnittsweise, vorzugsweise vollständig, Stein, insbesondere Granit, aufweisen, vorzugsweise darus gebildet sein.

Somit lässt sich ein robustes Maschinengestell mit niedrigem Wärmeausdehnungskoeffizienten erzielen. Diese Materialauswahl kann insbesondere an einem Anbringungsabschnitt des Maschinengestell für den Befestigungsabschnitt des Spindelgehäuses erfolgen.

Ein weiterer Aspekt der Erfindung betrifft eine Verwendung der Werkzeugspindel nach einem der obigen Aspekte für eine Schleifmaschine, insbesondere eine Schleifmaschine zum spitzenlosen Schleifen.

Die vorliegende Erfindung wird im Folgenden durch Bezugnahme auf die beigefügten Zeichnungen detailliert beschrieben.
Fig. 1 zeigt eine Draufsicht auf eine erfindungsgemäße Werkzeugspindel.
Fig. 2 zeigt einen Schnitt entlang einer Linie A-A in Fig. 1

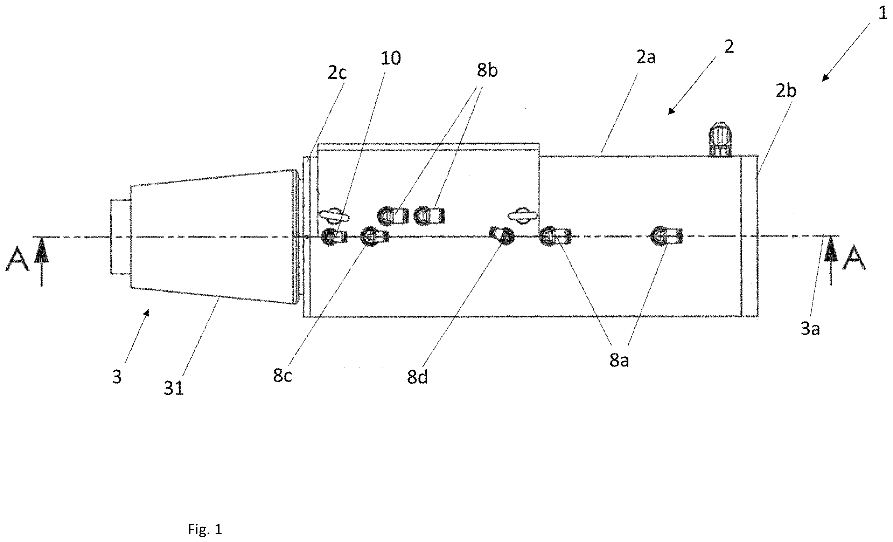

In Fig. 1 ist eine Werkzeugspindel 1 dargestellt. Die Werkzeugspindel 1 kann beispielsweise an einem Maschinengestellt, wie einem Granitblock, einer Schleifmaschine als Beispiel einer Werkzeugmaschine befestigt werden. Die Werkzeugspindel 1 kann insbesondere zum Rundschleifen, weiterhin insbesondere spitzenlosen Rundschleifen, verwendet werden.

Die Werkzeugspindel 1 weist als wesentliche Komponenten ein Spindelgehäuse 2 und eine Spindelwelle 3 auf, die sich entlang einer Spindelachse 3a erstreckt, die eine axiale Richtung definiert.

Das Spindelgehäuse 2 weist einen Hauptkörper 2a und einen Deckel 2b auf. Der Hauptkörper 2a kann als ein Element integral ausgebildet sein, insbesondere monolithisch. Das Spindelgehäuse 2, zumindest aber der Hauptkörper 2a davon, kann aus demselben Material wie die Spindelwelle 3 gefertigt sein.

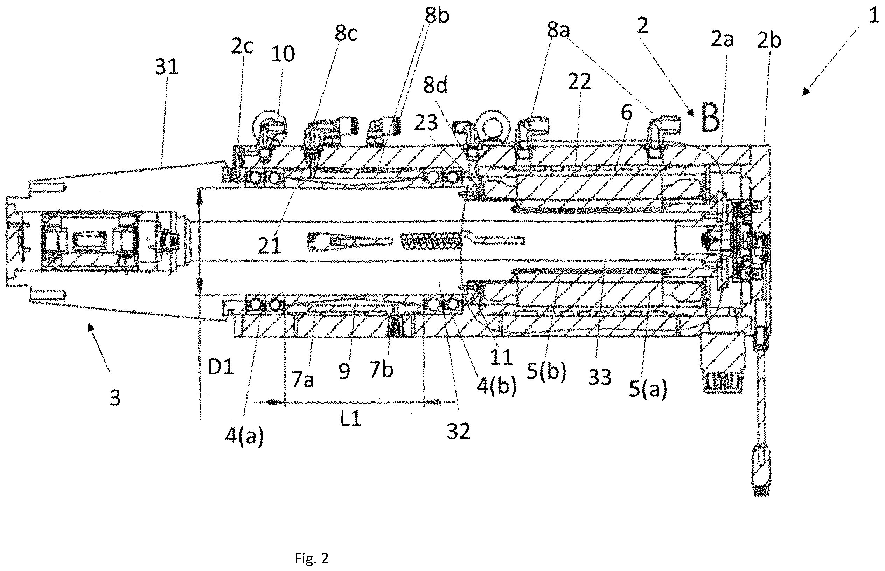

Der Hauptkörper 2a erstreckt sich im Wesentlichen entlang der Spindelachse. Der Hauptkörper 2a ist ein hohlzylindrisches Element, wie in Fig. 2 zu sehen ist, mit einem kreisförmigen Querschnitt und im Wesentlichen konstanten Außendurchmesser entlang der Spindelachse.

Das Spindelgehäuse 2 definiert in axialer Richtung zwei Aufnahmekammern, nämlich eine Lageraufnahmekammer 21 und eine Antriebsaufnahmekammer 22, die durch einen nach innen vorstehenden Vorsprung 23 getrennt sind, der jedoch entfallen kann. Die beiden Aufnahmekammern haben jeweils einen im Wesentlichen konstanten kreisförmigen Innendurchmesser. Die jeweiligen Innendurchmesser der Aufnahmekammern 21 und 22 sind bevorzugt gleich groß.

In der Lageraufnahmekammer 21 ist eine Lagereinrichtung 4 angeordnet. Die Lagereinrichtung 4 befindet sich in radialer Richtung zwischen Spindelgehäuse 2 und Spindelwelle 3.

Die Antriebsaufnahmekammer 22 nimmt eine Antriebseinrichtung 5 auf. Die Antriebseinrichtung 5 ist hier eine rotierende elektrische Maschine, insbesondre ein Elektromotor. Es kann sich bei ihr um einen Gleich- oder Wechselstrommotor handeln. Insbesondere kann ein Asynchronmotor als die Antriebseinrichtung 5 vorgesehen sein.

Die Antriebseinrichtung 5 befindet sich in radialer Richtung zwischen Spindelgehäuse 2 und Spindelwelle 3. Die Antriebseinrichtung weist einen Stator 5a und einen Rotor 5b auf. Der Stator 5a ist an der Innenseite des Spindelgehäuses 2 fixiert, wobei eine Kühlhülse 6 dazwischengeschaltet ist.

Der Rotor 5b kann einen Rotorträger und Rotorwicklungen auf dem Rotorträger aufweisen. Der Rotor 5b ist so an der Spindelwelle 3 angebracht, dass er sich integral mit dieser drehen kann.

Die Spindelwelle 3 ist als eine rotationssymmetrische Hohlwelle ausgebildet. Sie weist entlang der Spindelachse 3a von links nach rechts in Fig. 2 einen Werkzeugschnittstellenabschnitt (Werkzeugschnittstelle im Sinne der Ansprüche) 31, einen Lagerabschnitt 32, und einen Kopplungsabschnitt 33 auf.

Der Werkzeugschnittstellenabschnitt 31 weitet sich konusförmig in axialer Richtung zum Kopplungsabschnitt 33 hin auf. Der Außendurchmesser D1 des Lagerabschnitts 32 ist in axialer Richtung einheitlich und kleiner als der minimale Außendurchmesser des Werkzeugschnittstellenabschnitts 31.

Schließlich ist auch der Außendurchmesser des Kopplungsabschnitts 33 im Wesentlichen einheitlich in axialer Richtung und wiederum kleiner als der Durchmesser D1 des Lagerabschnitts 32.

Am Außenumfang des Lagerabschnitts 32 mit einheitlichem Außendurchmesser ist die Lagereinrichtung 4 angeordnet.

Die Lagereinrichtung 4 ist zwischen Werkzeugschnittstellenabschnitt 31 und Kopplungsabschnitt 33 angeordnet, und weist einen ersten Festlagerabschnitt 4a auf der Seite des Werkzeugschnittstellenabschnitts 31 und einen zweiten Festlagerabschnitt 4b auf der Seite des Kopplungsabschnitts 33 auf.

Der erste Festlagerabschnitt 4a weist hier zwei identische Wälzlager, nämlich Schrägkugellager, auf. Diese sind axial direkt aneinander angeordnet. Die Drucklinie der Schrägkugellager verläuft in Richtung Spindelachse zum Werkzeugschnittstellenabschnitt 31.

Der zweite Festlagerabschnitt 4b weist hier zwei identische Wälzlager, nämlich Schrägkugellager, auf. Diese sind axial direkt aneinander angeordnet. Die Drucklinie der Schrägkugellager verläuft in Richtung Spindelachse zum Kopplungsabschnitt 33. Somit definieren der erste und zweite Festlagerabschnitt eine O-Anordnung. Ein Außenring des Festlagerabschnitts 4b liegt an dem Vorsprung 23 an, der die beiden Aufnahmekammern 21 und 22 gleichen Durchmesser trennt.

Der minimale axiale Abstand L1 zwischen den beiden Festlagerabschnitten 4a und 4b wird durch zwei Distanzhülsen 7a und 7b festgelegt, die radial voneinander beabstandet sind. Die radial äußere Distanzhülse 7a ist auch eine Kühlhülse.

Eine Klemmhülse 11, die mittels Schrauben axial in einen Wellenabsatz zwischen Lagerabschnitt 32 und Kopplungsabschnitt 33 verschraubt ist, spannt die Lagereinrichtung 4 vor.

Der Rotor 5b ist direkt mit dem Kopplungsabschnitt 33 gekoppelt und koaxial dazu angeordnet.

Weiterhin weist die Werkzeugspindel 1 zumindest eine Kühleinrichtung auf.

Eine Kühleinrichtung 8a ist als Wasserkühlung ausgestaltet und ist angeordnet, die Antriebseinrichtung 5, insbesondere den Stator 5a, zu kühlen. Sie umfasst die Kühlhülse 6, die an ihrem Außenumfang mehrere axial beabstandete und miteinander verbundene Umfangsrillen aufweist, in denen das Kühlfluid strömen kann. Zudem umfasst die Kühleinrichtung 8a Anschlussöffnungen im Spindelgehäuse 2, die mit zwei der Umfangsrillen zum Zu- und Abströmen des Kühlfluids in Verbindung stehen, sowie Anschlüsse zum Zirkulieren des Fluids, die in die Anschlussöffnungen eingesetzt sind.

Eine Kühleinrichtung 8b ist ähnlich ausgestaltet und ist angeordnet, die Lagereinrichtung 4, also erste und zweite Festlagerabschnitte, zu kühlen. Auch sie ist flüssigkühlend ausgestaltet und umfasst die Kühlhülse 7a, die an ihrem Außenumfang mehrere axial beabstandete und miteinander verbundene Umfangsrillen aufweist, in denen das Kühlfluid strömen kann. Auch hier sind Anschlussöffnungen im Spindelgehäuse 2 vorgesehen, die mit den Umfangsrillen kommunizieren. Weiterhin sind Anschlüsse zum Zirkulieren des Fluids in die Anschlussöffnungen vorgesehen.

Eine weitere Kühleinrichtung 8c ist zur gasförmigen Kühlung des Lagerabschnitts 4, insbesondere mit Luft, ausgestaltet. Sie umfasst einen Luftzirkulationsraum 9 in radialer Richtung zwischen den Hülsen 7a und 7b. Anschlussöffnungen durch das Spindelgehäuse 2 und die Kühlhülse 7a kommunizieren mit dem Luftzirkulationsraum 9. Anschlüsse können in die Anschlussöffnungen eingesetzt sein.

Noch eine weitere Kühleinrichtung 8d ist zur gasförmigen Kühlung, insbesondere mit Luft, ausgestaltet und umfasst zumindest eine Öffnung im Spindelgehäuse 2 durch den Vorsprung 23, also einen Abschnitt des Gehäuses in axialer Richtung zwischen Kopplungsabschnitt 33 und zweiten Festlagerabschnitt 4b, oder zwischen Antriebseinrichtung 5 und Lagereinrichtung 4. Durch diese Öffnung kann das Kühlfluid über einen Anschluss zugeführt werden.

Ein weiterer Deckel 2c ist auf einer axial gegenüberliegenden Seite des Deckels 2b vorgesehen und bildet einen Anschlag für den Außenring des ersten Festlagerabschnitts 4a. Der Deckel 2b verschließt einen kopplungsseitigen Endabschnitt des Hauptkörpers 2a, und der Deckel 2c einen werkzeugseitigen Endabschnitt des Hauptkörpers 2a.

Eine Sperrluftdichtungseinrichtung 10 ist zum Abdichten zwischen Deckel 2c und Spindelwelle 3 vorgesehen.

Gemäß der Erfindung ist die Spindelwelle 3 vollständig aus einem Material hergestellt, das zumindest in einer Richtung einen Wärmeausdehnungskoeffizienten in einem Bereich mit einer Untergrenze aus [-10*10⁻⁶/K, -5*10⁻⁶/K und -2*10⁻⁶/K] und einer Obergrenze aus [+2*10⁻⁶/K, +5*10⁻⁶/K und +10*10⁻⁶/K], beispielsweise in einem Bereich [-2*10⁻⁶/K; +2*10⁻⁶/K], aufweist. Beispielsweise kann die Spindelwelle aus CFK gefertigt sein. Das Spindelgehäuse 2 kann aus dem selben Material gefertigt sein. Wicklungsrichtungen der CFK-Fasern können gleich sein, oder sich aber unterscheiden.

Beispielsweise kann die Spindelwelle 3 zumindest zwei Lagen mit unterschiedlicher Verlegerichtung/Wicklungsrichtung aufweisen, wobei der Verlegewinkel in Bezug auf die Spindelachse 3a und die radiale Richtung betragsmäßig gleich, aber in entgegengesetzte Richtungen weisen kann.

Funktionen und Effekte der Erfindung werden im Folgenden beschrieben.

Beispielsweise beim spitzenlosen Rundschleifen werden relativ große Schleifscheiben mit Durchmessern von bis zu 500 mm als Werkzeug verwendet. Die Schleifscheibe kann beispielsweise über einen konusförmigen Werkzeughalter an dem konusförmigen Werkzeugschnittstellenabschnitt 31 angebracht werden. Über einen Flanschabschnitt der Spindelwelle 3 auf einer dem Kopplungsabschnitt 33 abgewandten Seite des Werkzeugschnittstellenabschnitts 31, in den eine Klemmhülse verschraubt werden kann, kann das Werkzeug an dem Werkzeugschnittstellenabschnitt 31 verklemmt werden.

Die Spindelwelle 3 muss die nötige Drehzahl bis zu 6.000 Umdrehungen/min bereitstellen. Zusammen mit dem großen Durchmesser der Schleifscheibe kann es hier zu einer beträchtlichen Wärmeentwicklung kommen. Um dennoch eine hohe Präzision, insbesondere Rundlaufeigenschaft zu gewährleisten, ist die Spindelwelle 3 und zudem das Spindelgehäuse 3 aus einem Material mit einem Wärmeausdehnungskoeffizienten von im Wesentlichen Null gebildet. Zudem können wärmeinduzierte Spannungen vermieden werden.

Durch die Anordnung der Lagereinrichtung 4 zwischen Werkzeugschnittstelle und Kopplungsabschnitt 33 der Spindelwelle, also auf einer Seite des Kopplungsabschnitts 33 und der Antriebseinrichtung 5 in axialer Richtung, können die entstehenden Verformungen gering gehalten werden. Auch kann die axiale Länge reduziert werden. Somit kann die Präzision erhöht werden.

Die Länge L1 ist größer als der Durchmesser D1 des Lagerabschnitts 31, also der Bereich der von der Lagereinrichtung gelagert wird. Somit kann eine ausreichende Steifigkeit in Bezug auf den Durchmesser D1 sichergestellt werden, und auch Lasten durch die Antriebseinrichtung 5 könne abgetragen werden.

Das Material der Spindelwelle 3 und/oder des Spindelgehäuses 2 kann im Wesentlichen isotrop bezüglich des Wärmeausdehnungskoeffizienten sein, zumindest ist aber in Radialrichtung der Wärmeausdehnungskoeffizient im Wesentlichen Null. Somit kann eine hohe Rundlaufgenauigkeit erzielt werden.

Die Lagereinrichtung 4 ist eine vorgespannte O-Anordnung. Zudem sind die Festlagerabschnitte 4a und 4b jeweils mehrreihige Lager, hier zwei benachbarte Schrägkugellager. Somit kann die Lagersteifigkeit erhöht werden, und hohe Prozesskräfte können aufgenommen werden. Es ist zur Kenntnis zu nehmen, dass in diesem Beispiel die zwei direkt in Axialrichtung benachbarten einreihigen Lager jeweils das mehrreihige Lager bilden. Die zwei benachbarten Lager sind jeweils in einer O-Anordnung angeordnet, also eine Tandem-O-Anordnung.

Der Kopplungsabschnitt 33 ist radial weiter innen als der Lagerabschnitt 31, also als der Innendurchmesser der Festlagerabschnitte 4a und 4b, gelegen. Somit kann radial Platz für die Antriebseinrichtung geschaffen werden. Außerdem können die einzelnen Lager einfach an der Spindelwelle 3 von der Seite des Kopplungsabschnitts 33 angebracht werden. Dies ist besonders vorteilhaft, wenn der erste 4a und zweite Festlagerabschnitt 44 denselben Innendurchmesser aufweisen.

Die koaxiale Anordnung der rotierenden elektrischen Maschine als Antriebseinrichtung 5 mit der Spindelwelle ermöglicht weiterhin Platzersparnis.

Die Kühleinrichtungen 8a bis 8d ermöglichen eine Verringerung der Wärmeentwicklung. Somit kann selbst die Lagereinrichtung, die aus einem anderen Material als das der Spindelwelle und des Spindelgehäuses gebildet sein kann, insbesondere mit einem höheren Wärmeausdehnungskoeffizienten, vor Verformung geschützt werden.

Die Spindelwelle 3 ist als Hohlwelle ausgebildet. Somit kann das Gewicht reduziert werden. Zudem können im Innenraum der Hohlwelle weitere Komponenten aufgenommen werden. Beispielsweise kann an einem Endabschnitt der Spindelwelle auf Seite des Kopplungsabschnitts 33 eine Auswuchteinrichtung mit zumindest einem Auswuchtgewicht im Innenraum der Spindelwelle 33 vorgesehen sein.

Das Spindelgehäuse 2 kann einen nicht gezeigten Befestigungsabschnitt wie einen Flansch beinhalten. Dieser kann beispielsweise an einem mittleren Abschnitt des Spindelgehäuses in axialer Richtung vorgesehen sein und vom Hauptkörper 2a radial nach außen vorstehen. Mit diesem Befestigungsabschnitt kann die Werkzeugspindel 1 an einem Maschinengestell, beispielsweise aus Granit, befestigt werden. Dazu können mehrere Schrauben in Durchgangsbohrungen entlang des Umfangs des Befestigungsabschnitts vorgesehen sein.

Das Maschinengestell kann zumindest abschnittsweise ein Material aufweisen, das einen höheren Wärmeausdehnungskoeffizienten als den des Spindelwellenmaterials aufweist.

Modifikationen der Ausführungsform werden nun beschrieben.

Das Material der Spindelwelle und/oder des Spindelgehäuses kann ein anderes als CFK sein. Beispielsweise kann aramidfaserverstärkter Kunststoff für zumindest eines der Spindelwelle und des Spindelgehäuses verwendet werden.

Zumindest einer der Festlagerabschnitte kann kein Schräglager umfassen. Es können auch andere Lager als Kugellager verwendet werden. Beispielsweise kann ein Kegelrollenlager für zumindest einen der Festlagerabschnitte verwendet werden.

Die Werkzeugspindel kann auch für andere Werkzeugmaschinen verwendet werden, beispielsweise Fräsmaschinen.

Das Spindelgehäuse kann auch mehrteilig ausgebildet sein. So kann der Hauptkörper mehrere Teile umfassen.

Die Festlagerabschnitte können auch verschiedene Innendurchmesser und somit der Lagerabschnitt verschiedene Außendurchmesser haben.

Ein Getriebe kann zwischen Antriebseinrichtung und Kopplungseinrichtung vorgesehen sein.

Der Vorsprung 23 kann entfallen. Der Innendurchmesser der Antriebsaufnahmekammer 22 kann größer sein als der der Lageraufnahmekammer 21.

## Patentansprüche

1. Werkzeugspindel (1), vorzugsweise für Schleifmaschinen, nochmals bevorzugt für spitzenlose Schleifmaschinen, umfassend:
eine Spindelwelle (3), die sich entlang einer Spindelachse (3a) erstreckt und an die ein Werkzeug an einer Werkzeugschnittstelle (31) drehfest koppelbar ist;
ein Spindelgehäuse (2), das die Spindelwelle (3) aufnimmt;
eine Antriebseinrichtung (4), die zum drehenden Antrieb mit einem Kopplungsabschnitt (33) der Spindelwelle (3) gekoppelt ist,
eine Lagereinrichtung (4), die die Spindelwelle (3) im Spindelgehäuse (2) lagert,
wobei die Spindelwelle (3), und vorzugsweise das Spindelgehäuse (2), aus einem Material gefertigt ist, das zumindest in einer Richtung einen Wärmeausdehnungskoeffizienten in einem Bereich mit einer Untergrenze aus [-10*10⁻⁶/K, -5*10⁻⁶/K und -2*10⁻⁶/K] und einer Obergrenze aus [+2*10⁻⁶/K, +5*10⁻⁶/K und +10*10⁻⁶/K], insbesondere im Wesentlichen Null, aufweist,
wobei die Lagereinrichtung (4) einen ersten werkzeugschnittstellenseitigen Festlagerabschnitt (4a) und einen zweiten kopplungsabschnittsseitigen Festlagerabschnitt (4b) aufweist, wobei die Lagereinrichtung (4) entlang der Spindelachse (3a) zwischen Werkzeugschnittstelle (31) und Kopplungsabschnitt (3) angeordnet ist und alleine die Spindelwelle lagert.

2. Werkzeugspindel (1) nach Anspruch 1, wobei
ein minimaler Abstand (L1) zwischen dem ersten Festlagerabschnitt (4a) und dem zweiten Festlagerabschnitt (4b) entlang der Spindelachse (3a) gleich oder größer einem maximalen Durchmesser (D1) der Spindelwelle (3) in einem Bereich ist, der von dem ersten (4a) und zweiten Festlagerabschnitt (4b) gelagert wird.

3. Werkzeugspindel (1) nach Anspruch 1 oder 2,
wobei die zumindest eine Richtung der Wärmeausdehnung eine Radialrichtung der Spindelwelle (3) ist, und vorzugsweise auch eine Richtung entlang der Spindelachse (3a) ist.

4. Werkzeugspindel (1) nach zumindest einem der vorangehenden Ansprüche,
wobei zumindest der erste Festlagerabschnitt (4a) ein mehrreihiges Lager umfasst.

5. Werkzeugspindel (1) nach zumindest einem der vorangehenden Ansprüche, wobei
zumindest einer von dem ersten (4a) und dem zweiten Festlagerabschnitt (4b) vorgespannt ist.

6. Werkzeugspindel (1) nach zumindest einem der vorangehenden Ansprüche, wobei zumindest der erste Festlagerabschnitt (4a) ein Schräglager umfasst.

7. Werkzeugspindel (1) nach Anspruch 6, wobei der erste Festlagerabschnitt (4a) und der zweite Festlagerabschnitt (4b) eine O-Anordnung definieren.

8. Werkzeugspindel (1) nach zumindest einem der vorangehenden Ansprüche, wobei die Spindelwelle (3) als Hohlwelle ausgebildet ist.

9. Werkzeugspindel (1) nach zumindest einem der vorangehenden Ansprüche, wobei
der Kopplungsabschnitt (33) weiter radial innen als der erste (4a) und zweite Festlagerabschnitt (4b) gelegen ist.

10. Werkzeugspindel (1) nach zumindest einem der vorangehenden Ansprüche, wobei
die Antriebseinrichtung (5) eine rotierende elektrische Maschine ist.

11. Werkzeugspindel (1) nach zumindest einem der vorangehenden Ansprüche,
wobei die Antriebseinrichtung (5) koaxial zur Spindelachse (3a) angeordnet ist.

12. Werkzeugspindel (1) nach zumindest einem der vorangehenden Ansprüche, wobei
das Material der Spindelwelle (3) und/oder des Spindelgehäuses (2) kohlefaserverstärkten Kunststoff, insbesondere mit unterschiedlichen Wicklungsrichtungen, aufweist, vorzugsweise daraus gebildet wird.

13. Werkzeugspindel (1) nach zumindest einem der vorangehenden Ansprüche, weiterhin umfassend eine, vorzugsweise fluidbetriebene, Kühleinrichtung (8a, 8b, 8c, 8d), die ausgestaltet ist, den ersten (4a) und/oder zweiten Festlagerabschnitt (4b) und/oder die Antriebseinrichtung (5) und/oder einen Abschnitt des Spindelgehäuses (2) zwischen Kopplungsabschnitt (33) und dem zweiten Festlagerabschnitt (4b) zu kühlen.

14. Werkzeugspindel (1) nach Anspruch 13, wobei
der erste (4a) und/oder zweite Festlagerabschnitt (4b) gasförmig gekühlt, vorzugsweise luftgekühlt, ist, und/oder
die Antriebseinrichtung (5) flüssiggekühlt, vorzugsweise wassergekühlt, ist.

15. Werkzeugspindel (1) nach zumindest einem der vorangehenden Ansprüche, weiterhin umfassend einen Befestigungsabschnitt, der an einem Maschinengestell anbringbar ist und mit dem Spindelgehäuse (2) gekoppelt ist.

16. Werkzeugmaschine, vorzugsweise Schleifmaschine, umfassend:
ein Maschinengestell; und
eine Werkzeugspindel (2) nach zumindest einem der vorangehenden Ansprüche, die an dem Maschinengestell befestigt ist, wobei vorzugsweise
das Maschinengestell zumindest abschnittsweise ebenfalls aus einem Material mit einem Wärmeausdehnungskoeffizienten in einem Bereich mit einer Untergrenze aus [-10*10⁻⁶/K, - 5*10⁻⁶/K und -2*10⁻⁶/K] und einer Obergrenze aus [+2*10⁻⁶/K, +5*10⁻⁶/K und +10*10⁻⁶/K], insbesondere von im Wesentlichen Null, ausgebildet ist, und/oder
das Material der Spindelwelle (2) einen niedrigeren Wärmeausdehnungskoeffizienten als den des Materials des Maschinengestells aufweist, und/oder
das Material des Maschinengestells nichtmetallisch ist, insbesondere zumindest abschnittsweise, vorzugsweise vollständig, Stein, insbesondere Granit, aufweist, vorzugsweise daraus gebildet wird.
